# EUROPÄISCHE PATENTSCHRIFT

(11) **EP 1 108 940 B1**
(45) Veröffentlichungstag und Bekanntmachung des Hinweises auf die Patenterteilung: **03.03.2004**
(21) Anmeldenummer: 00124986.1
(22) Anmeldetag: 16.11.2000
(51) Int. Cl.: F16L 19/028

(54) **Fitting für Kunststoff-Metall-Verbundrohre**
Fitting for plastic-metal composite pipes
Raccord pour des tubes composites en plastique et métal

(30) Priorität: 14.12.1999 DE 19960045
(43) Veröffentlichungstag der Anmeldung: 20.06.2001
(73) Patentinhaber: Uponor Innovation AB, 513 81 Fristad (SE)
(72) Erfinder: Bolle, Bernfried, 48465 Samern (DE); Thiemann, Reinhard, 48607 Ochtrup (DE); Störmann, Michael, 48629 Metelen (DE)
(74) Vertreter: Hilleringmann, Jochen, Dipl.-Ing.

(56) Entgegenhaltungen:
- FR-A- 2 572 784
- US-A- 3 833 984
- US-A- 5 529 349
- US-A- 5 718 459

## Beschreibung

Die Erfindung betrifft einen Fitting für ein Kunststoff-Metall-Verbundrohr mit einer Innenschicht aus Kunststoff und einer Metallummantelung um die Innenschicht, wobei das Verbundrohr an seinem Anschlussende mit einem eine Flanschbreite aufweisenden Außenflansch versehen ist, der durch eine Faltung der Wandung des Rohres gebildet ist, wobei die Faltung einen von dem zylindrischen Abschnitt der Rohrwandung im wesentlichen radial nach außen weisenden ersten Faltungsabschnitt und einen sich an den ersten Faltungsabschnitt anschließenden zweiten Faltungsabschnitt aufweist, der parallel zum ersten Faltungsabschnitt verläuft und kürzer ist als der erste Faltungsabschnitt, so dass die Innenschicht innerhalb eines sich an den zylindrischen Abschnitt der Rohrwandung anschließenden Dichtungsbereich des ersten Faltungsabschnitts freiliegt.

Im Stand der Technik existieren Fittinge, an die mit einem Außenflansch versehene Rohrenden anschließbar sind. Zu diesem Zweck müssen die Rohrenden vorbearbeitet werden. Im Falle von Kunststoff-Metall-Verbundrohren, die ein Innen- oder Basisrohr aus Kunststoff mit einer Metallummantelung als Diffusionssperre aufweisen, wird das Rohrende axial gestaucht, bis seine Wand unter Bildung eines Außenflansches aufbördelt. Der Außenflansch weist eine Wandfaltung auf, die aus einem vom nicht aufgebördelten zylindrischen Teil des Rohres im wesentlichen radial abstehenden ersten Faltungsabschnitt und einem unter Zurückbiegung um 180° verlaufenden zweiten Faltungsabschnitt besteht. Die axiale Dicke des Außenflansches ist also im wesentlichen gleich der doppelten Dicke der Rohrwandung.

Aus DE-U-299 10 515 ist ein Fitting bekannt, bei dem der Außenflansch am Fitting eingeklemmt gehalten und damit das Rohr axial gesichert ist. Der dichte Anschluss des Rohres erfolgt entweder an den Außenflächen des Außenflansches oder im sich an den Außenflansch anschließenden Abschnitt des Rohrendes. Die Metallummantelung ist zumeist mit einer Kunststoff-Außenschicht überzogen, an denen Anlage- und gegebenenfalls Dichtflächen des Fittings anliegen.

Ferner sind aus US-A-5 718 459 und US-A-5 529 349 Fittinge für Rohre mit gefalteten Außenflanschen bekannt, die eine Dichtfläche aufweisen, welche unter einem spitzen Winkel zur Achse des Fittingkörpers verläuft.

Insbesondere bei Rohren größeren Querschnitts, wie sie z.B. bei industriellen Anwendungen als Steigrohre eingesetzt werden, ist die Metallummantelung des Innenrohres stärker dimensioniert, was vorteilhaft für die Zugentlastung ist, aber wegen der geringeren Kompressibilität des Außenflansches gewisse Nachteile bei der Abdichtung mit sich bringt. Außerdem sollte dafür gesorgt werden, dass die freiliegende Metallummantelung am Rohrende nicht mit dem durch das Rohr zu transportierenden Fluid in Kontakt gelangt.

Der Erfindung liegt die Aufgabe zugrunde, einen Fitting für ein Kunststoff-Metall-Verbundrohr mit Außenflansch an seinem Anschlussende zu schaffen, der eine zuverlässige Abdichtung und sichere Zugentlastung des Rohres gewährleistet.

Zur Lösung dieser Aufgabe wird mit der Erfindung ein Fitting für ein Kunststoff-Metall-Verbundrohr vorgeschlagen, das mit einer Innenschicht aus Kunststoff und einer Metallummantelung um die Innenschicht, wobei das Verbundrohr an seinem Anschlussende mit einem eine Flanschbreite aufweisenden Außenflansch versehen ist, der durch eine Faltung der Wandung des Rohres gebildet ist, wobei die Faltung einen von dem zylindrischen Abschnitt der Rohrwandung im wesentlichen radial nach außen weisenden ersten Faltungsabschnitt und einen sich an den ersten Faltungsabschnitt anschließenden zweiten Faltungsabschnitt aufweist, der parallel zum ersten Faltungsabschnitt verläuft und kürzer ist als der erste Faltungsabschnitt, so dass die Innenschicht innerhalb eines sich an den zylindrischen Abschnitt der Rohrwandung anschließenden Dichtungsbereich des ersten Faltungsabschnitts freiliegt.

Der für ein solches Rohr ausgelegte Fitting weist erfindungsgemäß auf:
- einen Fittingkörper mit einer zum Anschlussende des Verbundrohres koaxialen Achse,
- eine am Fittingkörper vorgesehene Dichtfläche zur Anlage an dem Dichtungsbereich der Innenschicht des Verbundrohres, wobei die Dichtfläche unter einem spitzen Winkel zur Achse des Fittingkörpers verläuft, und
- ein Einspannelement zur Anlage an dem ersten Faltungsabschnitt des Außenflansches des Verbundrohres, wobei das Einspannelement zum Andrücken des Dichtungsbereichs der Innenschicht des Verbundrohres innerhalb von dessen Außenflansch gegen die Dichtfläche des Fittingkörpers vorgesehen ist und an diesen festlegbar ist,
- wobei die Dichtfläche des Fittingkörpers mindestens einen in Richtung des Anschlussendes des Verbundrohres weisenden Vorsprung zum Anliegen bzw. zum zumindest teilweisen Eindringen in das Material der Innenschicht des Verbundrohres in dem Dichtungsbereich) der Innenschicht aufweist.

Der erfindungsgemäße Fitting ist mit einem Fittingkörper versehen, der eine zum Anschlussende des Verbundrohres (gedachte) koaxiale Achse aufweist. Der Fittingkörper ist ferner mit einer Dichtfläche versehen, die in einem spitzen Winkel zur Achse des Fittingkörpers verläuft und an der Innenschicht des Verbundrohres anliegt, und zwar in dem Dichtbereich des ersten Faltungsabschnitts der Rohrwandung, wobei der Dichtbereich an den zylindrischen Teil der Rohrwandung des Verbundrohres anschließt. Mit Hilfe eines Einspannelements ist das Anschlussende des Verbundrohres am Fittingkörper gehalten. Neben der Einspannfunktion und damit neben der Funktion der Zugentlastung des angeschlossenen Verbundrohres übernimmt das Einspannelement auch die Aufgabe, den Außenflansch am Anschlussende des Verbundrohres gegen die Dichtfläche des Fittingkörpers zu drücken, so dass der Dichtungsbereich der Rohrwandung an der Dichtfläche des Fittingkörpers dichtend anliegt.

Die Dichtfläche weist mindestens einen Vorsprung auf, der im wesentlichen in Richtung des Anschlussendes des Verbundrohres weist und zum Eindringen in das Material der Innenschicht des Verbundrohres in dessen Dichtungsbereich vorgesehen ist. Durch diesen insbesondere auf der vorzugsweise konisch ausgebildeten Dichtfläche ringförmig umlaufenden Vorsprung, der zweckmäßigerweise eine dreieckige Gestalt aufweist, kommt es zu einer Art Labyrinthdichtung zwischen dem Fittingkörper und dem Verbundrohr. Zweckmäßigerweise existieren mehrere derartige rippenförmige Vorsprünge, die parallel zueinander und konzentrisch auf der Dichtfläche verlaufen.

Der erfindungsgemäße Dichtungskörper dichtet also an der Kunststoff-Innenschicht des Verbundrohres ab, und zwar in demjenigen Bereich der Kunststoff-Innenschicht, in dem diese aus der zylindrischen Rohrwandung in den Außenflansch übergeht. Durch die Abdichtung an dieser Stelle ist verhindert, dass Fluid an die freiliegende Fläche der Metallummantelung am Rohrende gelangt. Damit braucht diese Fläche der Metallummantelung nicht mehr separat abgedichtet zu werden. Falls es für erforderlich erachtet wird, ist es selbstverständlich möglich, den erfindungsgemäßen Fittingkörper mit einer sich an die Dichtfläche anschließenden umlaufenden zylindrischen Ringfläche zu versehen, gegen die das Stirnende des zweiten Faltungsabschnitts und damit auch die freiliegende Metallummantelungsschicht anliegt.

Der erfindungsgemäße Fitting eignet sich insbesondere für die Vorkonfektionierung von Rohrelementen bzw. Rohrverbindungselementen. Der spezielle Außenflansch wird werksseitig hergestellt und zusammen mit dem Fitting an den Weiterverarbeiter bzw. den Installateur geliefert.

Neben einer konstruktiven Ausgestaltung der Dichtfläche zur Erhöhung der Flächenanpresskräfte des Verbundrohres an der Dichtfläche ist es gemäß einer vorteilhaften Weiterbildung der Erfindung auch möglich, die Dichtfläche mit einem Dichtelement auszustatten, das aus einem elastischen Material besteht und beispielsweise in einer Aufnahmenut der Dichtfläche aufgenommen ist. Zweckmäßigerweise ist dieses Dichtelement als elastischer O-Dichtungsring ausgebildet.

In weiterer vorteilhafter Ausgestaltung der Erfindung ist vorgesehen, die Dichtfläche ballig oder eben auszubilden, wobei die Dichtfläche zweckmäßigerweise unter einem Winkel 30° bis 90° und insbesondere unter einem Winkel von 45° bis 80° und höchst vorzugsweise unter einem Winkel von etwa 60° zur Achse des Fittingkörpers verläuft.

Die Verbindung des Einspannelements mit dem Fittingkörper erfolgt zweckmäßigerweise durch Verschraubung. Eine erste Alternative dieser Ausgestaltung besteht darin, dass das Einspannelement ein Außengewinde aufweist, das mit einem Innengewinde an einem die Dichtfläche zum Verbundrohr hin überragenden Kragen des Fittingkörpers ausgebildet ist. Eine Alternative zu dieser Ausgestaltung besteht darin, dass das Einspannelement nach Art einer Überwurfmutter ausgebildet ist, die ein Innengewinde aufweist, das mit einem Außengewinde des Fittingkörpers zusammenwirkt, welches auf der dem Verbundrohr abgewandten Seite des Fittingkörpers ausgebildet ist.

Nachfolgend wird die Erfindung anhand der Zeichnung näher erläutert. Im einzelnen zeigen:
- Fign. 1 bis 3: die einzelnen Verarbeitungsschritte zur Herstellung des Außenflansches des Verbundrohres, und zwar ausgehend von dem "unbehandelten" Rohrende (Fig. 1) über die Stauchung (Fig. 2) bis zur Bearbeitung des durch Stauchen hergestellten Außenflansches (Fig. 3),
- Fig. 4: einen Längsschnitt durch den Fitting zum Anschluss des gemäß Fig. 3 ausgebildeten Anschlussendes des Verbundrohres,
- Fig. 5: einen Längsschnitt durch eine alternative Ausgestaltung des Fittingkörpers mit in anderer Weise ausgebildeter Dichtfläche und
- Fig. 6: einen Längsschnitt durch ein weiteres Ausführungsbeispiel des Fittings mit als Überwurfmutter ausgebildetem Einspannelement.

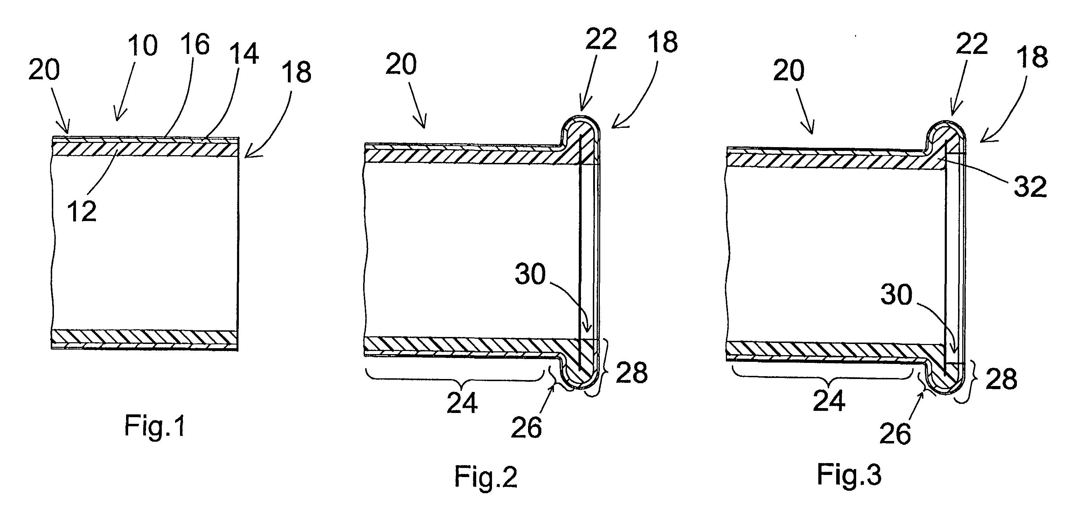

Bevor auf die Konstruktion des Fittings eingegangen wird, soll anhand der Fign. 1 bis 3 die Herstellung des Verbundrohr-Anschlussendes kurz erläutert werden. Fig. 1 zeigt einen Schnitt durch ein Verbundrohr 10, das ein Innen- oder Basisrohr 12 aus Kunststoff (vorstehend auch Innenschicht genannt), ein mittleres Metallrohr 14 (vorstehend auch Metallummantelung genannt) und ein Außen-Kunststoffrohr 16 aufweist. Dieses Verbundrohr 10 wird nun an seinem Anschlussende 18 durch Verformung und spanabhebende Bearbeitung bearbeitet, was anhand der Fign. 2 und 3 zu erkennen ist. Zunächst wird das Anschlussende 18 axial gestaucht, so dass sich die Rohrwandung 20 unter Bildung eines Außenflansches 22 nach außen aufwirft. Zu Erkennen ist, dass die Rohrwandung 20 ausgehend von ihrem zylindrischen Wandungsabschnitt 24 innerhalb eines ersten Faltungsabschnitts 26 radial auswärts verläuft, um dann nach einer Faltung um 180° innerhalb eines zweiten Faltungsabschnitts 28 radial einwärts zu verlaufen. Im Bereich der beiden Faltungsabschnitte 26,28 liegen die entsprechenden Abschnitte des Innenrohres 12 aneinander. Danach wird der zweite Faltungsabschnitt an seinem freien Ende 30 gekürzt, so dass nun am Anschlussende 18 ein freiliegender Dichtungsbereich 32 des Innenrohres 12 zu erkennen ist, der nicht von dem zweiten Faltungsabschnitt 28 überdeckt ist.

Das so bearbeitete Verbundrohr 10 lässt sich nun an einen Fitting 34 anschließen. Dieser Fitting 34 weist einen Fittingkörper 36 auf, der eine gedachte (Anschluss-)Achse 38 aufweist, die koaxial zum Durchlass 40 an dessen dem Verbundrohr 10 zugewandten Ende verläuft. Der Fittingkörper 36 ist mit einer konisch verlaufenden und zur Achse 38 konzentrischen Dichtfläche 42 versehen, die als Kegelstumpffläche ausgebildet ist. Diese Dichtfläche 42 erstreckt sich vom Durchlass 40 aus schräg nach radial auswärts und geht in eine Anlagefläche 44 über, die zylindrisch und konzentrisch zur Achse 38 als Ringfläche verläuft.

Über das Ende des Durchlasses 40 hinaus weist der Fittingkörper 36 einen Außenkragen 46 auf, der ein Innengewinde 48 aufweist. Der Außenkragen 46 ist dabei konzentrisch zur Achse 38 angeordnet. Mit dem Innengewinde 48 des Außenkragens 46 steht das Außengewinde 50 eines Einspannelements 52 in Gewindeeingriff, das nach Art einer Schraubenmutter mit Außengewinde ausgebildet ist. Dieses Einspannelement 52 umgibt das anzuschließende Verbundrohr 10 von außen und weist eine dem Fittingkörper 36 zugewandte Stirnfläche 54 auf, die, wie nachfolgend beschrieben wird, als Anlagefläche zur Anlage an dem Außenflansch 22 des Verbundrohres 10 dient.

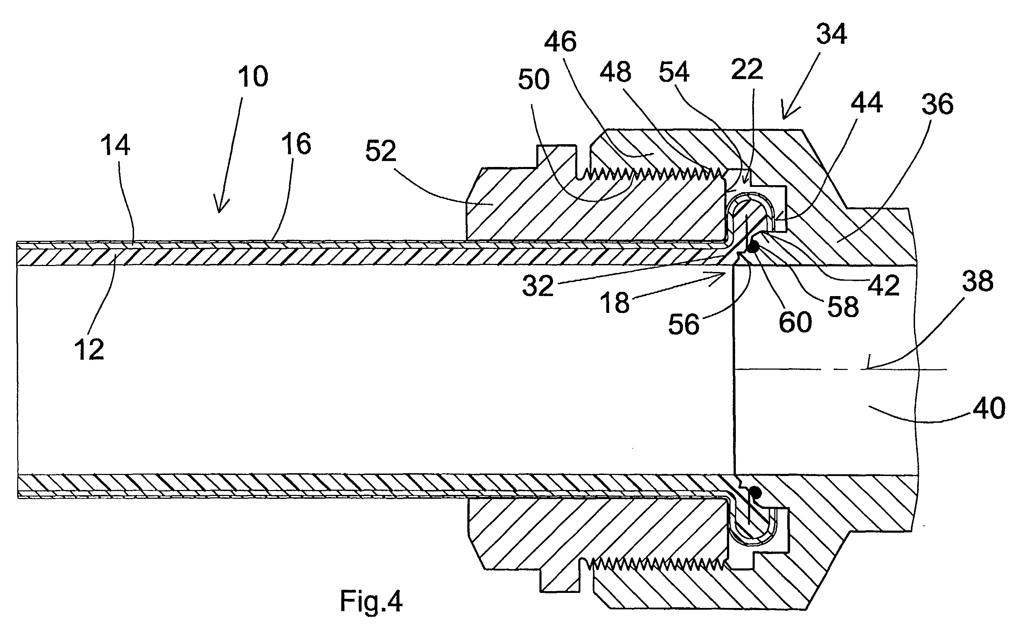

Zum Anschluss des Verbundrohres 10 wird auf dieses von dem dem Außenflansch 22 gegenüberliegenden Ende oder vor der Formung des Außenflansches 22 das Einspannelement 52 geschoben. Anschließend wird das Anschlussende 18 des Verbundrohres 10 gegen die Dichtfläche 42 des Fittingkörpers 36 geschoben, wobei der Dichtungsbereich 32 des Innenrohres 12 an der Dichtfläche 42 anliegt. In dem Ausführungsbeispiel gemäß Fig. 4 weist die Dichtfläche 42 zum einen einen vorstehenden rippenartigen umlaufenden Vorsprung 56 sowie ein in einer Aufnahmenut 58 befindliches Dichtelement 60 in Form eines O-Ringes auf.

Durch Verschrauben des Einspannelements 52 mit dem Außenkragen 46 des Fittingkörpers 36 wird in der Endphase der Verschraubung der Außenflansch 22 gegen den Fittingkörper 36 gedrückt. Dabei kommt es zur fluiddichten Anlage des Dichtungsbereichs 32 des Innenrohres 12 mit der Dichtfläche 42 des Fittingkörpers 36. Die an dem Außenflansch 22 anliegende Anlagefläche 54 des Einspannelements 52 sorgt neben der Aufbringung der erforderlichen Andrückkraft auch für die zuverlässige Zugentlastung und Halterung des Verbundrohres 10 am Fitting. Wie man anhand von Fig. 4 erkennen kann, liegt das freie Ende 30 des zweiten Faltungsabschnitts 28 des Außenflansches 22 des Verbundrohres 10 von außen an der zylindrischen Fläche 44 an. Falls gewünscht, kann auch hier noch eine Dichtfunktion realisiert werden, wobei es allerdings entscheidender ist, dass an dieses freie Ende 30 kein Fluid gelangt. Denn Fluid würde hier zu Korrosionen des Metallrohres 14 führen können.

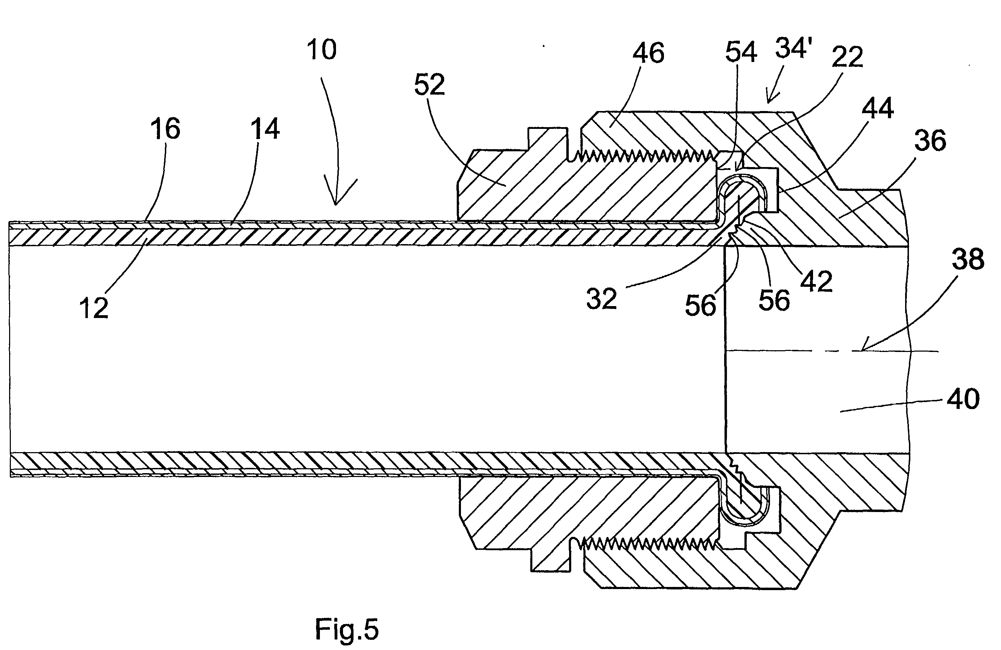

Fig. 5 zeigt einen Längsschnitt durch eine alternative Ausgestaltung des Fittings gemäß Fig. 4. Soweit die Teile dieses Fittings 34' gemäß Fig. 5 gleich bzw. funktionsgleich mit den Teilen des Fittings 34 gemäß Fig. 4 sind, sind sie mit den gleichen Bezugszeichen versehen.

Der Unterschied zwischen den Fittingen 34 und 34' besteht in der Ausbildung der Dichtfläche 42 des Fittingkörpers 36. Bei dem Ausführungsbeispiel gemäß Fig. 5 weist nämlich die Dichtfläche 42 zwei konzentrisch zueinander verlaufende Rippenvorsprünge 56 auf; auf einen separaten Dichtring ist hierbei verzichtet worden.

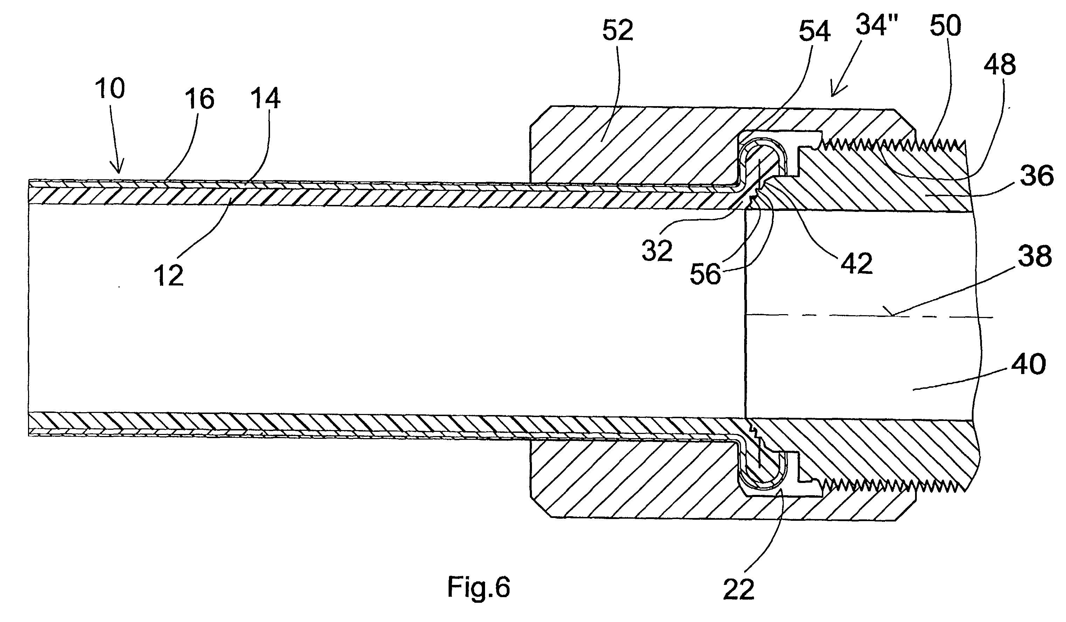

In Fig. 6 ist ein drittes Ausführungsbeispiel eines Fittings 34" gezeigt. Auch hier gilt wiederum, dass diejenigen Teile des Fittings 34", die den Teilen des Fittings 34 bzw. 34' der Fign. 4 und 5 entsprechen, mit den gleichen Bezugszeichen versehen sind.

Der Unterschied des Fittings 34" zum Fitting 34 besteht zum einen in der Ausbildung der Dichtfläche 42 mit zwei koaxialen rippenförmigen umlaufenden Vorsprüngen 56 unter Fortfall des Dichtungsrings und darüber hinaus in der Ausbildung des Einspannelements 52, das den Außenflansch 22 des Verbundrohres 10 übergreift und von außen mit dem Fittingkörper 36 verschraubbar ist. Das Einspannelement 52 des Fittings 34" ist also eher nach Art einer Überwurfmutter ausgebildet.

Wie sich aus den Fign. 4 bis 6 ergibt, dichten die Fittinge 34,34' und 34" im außerhalb des Innendurchmessers des Innenrohres 12 liegenden Dichtungsbereich 32 des Verbundrohres 10 ab, so dass keinerlei Durchmesserreduktion erfolgt, was im Hinblick auf die strömungstechnischen Eigenschaften der Fittinge von Vorteil ist.

## Patentansprüche

1. Fitting für ein Kunststoff-Metall-Verbundrohr mit einer Innenschicht (12) aus Kunststoff und einer Metallummantelung (14) um die Innenschicht (12), wobei das Verbundrohr (10) an seinem Anschlussende (18) mit einem eine Flanschbreite aufweisenden Außenflansch (22) versehen ist, der durch eine Faltung der Wandung (20) des Rohres gebildet ist, wobei die Faltung einen von dem zylindrischen Abschnitt (24) der Rohrwandung (20) im wesentlichen radial nach außen weisenden ersten Faltungsabschnitt (26) und einen sich an den ersten Faltungsabschnitt (26) anschließenden zweiten Faltungsabschnitt (28) aufweist, der parallel zum ersten Faltungsabschnitt (26) verläuft und kürzer ist als der erste Faltungsabschnitt (26), so dass die Innenschicht (12) innerhalb eines sich an den zylindrischen Abschnitt (24) der Rohrwandung (20) anschließenden Dichtungsbereich (32) des ersten Faltungsabschnitts (26) freiliegt, wobei der Fitting aufweist
- einen Fittingkörper (36) mit einer zum Anschlussende (18) des Verbundrohres (10) koaxialen Achse (38),
- einer am Fittingkörper (36) vorgesehenen Dichtfläche (42) zur Anlage an dem Dichtungsbereich (32) der Innenschicht (12) des Verbundrohres (10), wobei die Dichtfläche (42) unter einem spitzen Winkel zur Achse (38) des Fittingkörpers (36) verläuft und
- einem Einspannelement (52) zur Anlage an dem ersten Faltungsabschnitt (26) des Außenflansches (22) des Verbundrohres (10), wobei das Einspannelement (52) zum Andrücken des Dichtungsbereichs (32) der Innenschicht (12) des Verbundrohres (10) innerhalb von dessen Außenflansch (22) gegen die Dichtfläche (42) des Fittingkörpers (36) vorgesehen ist und an diesen festlegbar ist,
**dadurch gekennzeichnet,**
- **dass** die Dichtfläche (42) des Fittingkörpers (36) mindestens einen in Richtung des Anschlussendes (18) des Verbundrohres (10) weisenden Vorsprung (56) zum Anliegen bzw. zum zumindest teilweisen Eindringen in das Material der Innenschicht (12) des Verbundrohres (10) in dem Dichtungsbereich (32) der Innenschicht (12) aufweist.

2. Fitting nach Anspruch 1, **dadurch gekennzeichnet, dass** der mindestens eine Vorsprung (56) eine dreieckige Gestalt aufweist und als umlaufende Rippe ausgebildet ist.

3. Fitting nach Anspruch 2, **dadurch gekennzeichnet, dass** mehrere zueinander parallele umlaufende Rippen (56) vorgesehen sind.

4. Fitting nach einem der Ansprüche 1 bis 3, **dadurch gekennzeichnet, dass** die Dichtfläche (42) des Fittingkörpers (36) eine Aufnahmenut (58) für ein Dichtelement (60), insbesondere in Form eines O-Rings, aufweist.

5. Fitting nach einem der Ansprüche 1 bis 4, **dadurch gekennzeichnet, dass** die Dichtfläche (42) ballig oder eben ist und unter einem Winkel von 30° bis 90°, vorzugsweise 45° bis 80° und insbesondere etwa 60° zur Achse (38) des Fittingkörpers (36) verläuft.

6. Fitting nach einem der Ansprüche 1 bis 5, **dadurch gekennzeichnet, dass** das Einspannelement (52) mit dem Fittingkörper (36) verschraubbar oder in anderer Weise gegen axiale Verschiebungen gesichert verbindbar ist.

## Claims

1. A fitting for a plastic-metal composite tube, comprising an inner layer (12) of plastic and a metal sheathing (14) arranged around the inner layer (12), the composite tube (10) having its connection end (18) provided with an outer flange (22) having a flange width and being formed by a folded portion of the wall (20) of the tube, the folded portion comprising a first folded section (26) extending substantially radially outwards from the cylindrical portion (24) of the tube wall (20), and, joining the first folded section (26), a second folded section (28) extending in parallel to the first folded section (26) and being shorter than the first folded section (26), whereby the inner layer (12) is exposed within a sealing region (32) of the first folded section (26) joining the cylindrical portion (24) of the tube wall (20), the fitting comprising:
- a fitting body (36) having an axis (38) which is coaxial with the connection end (18) of the composite tube (10),
- a sealing face (42) provided on the fitting body (36) for abutment on the sealing region (32) of the inner layer (12) of the composite tube (10), the sealing face (42) extending at an acute angle relative to the axis (38) of the fitting body (36), and
- a clamping element (52) arranged to abut the first folded section (26) of the outer flange (22) of the composite tube (10), the clamping element (52) being provided, within the outer flange (22) of the tube, to press the sealing region (32) of the inner layer (12) of the composite tube (10) against the sealing face (42) of the fitting body (36), and further being adapted to be fixed on the fitting body (36),
**characterized in**
- **that** the sealing face (42) of the fitting body (36) comprises at least one projection (56) facing in the direction of the connection end (18) of the composite tube (10) and provided to abut on or at least partially enter the material of the inner layer (12) of the composite tube (10) in the sealing region (32) of the inner layer (12).

2. The fitting according to claim 1, **characterized in that** the at least one projection (56) has a triangular shape and is formed as a circumferential rib.

3. The fitting according to claim 2, **characterized in that** a plurality of mutually parallel circumferential ribs (56) are provided.

4. The fitting according to any one of claims 1 to 3, **characterized in that** the sealing face (42) of the fitting body (36) is formed with a receiving groove (58), particularly provided as an O-ring, for the sealing element (60).

5. The fitting according to any one of claims 1 to 4, **characterized in that** the sealing face (42) is bulged or planar and extends at an angle of 30° to 90°, preferably 45° to 80° and particularly about 60° relative to the axis (38) of the fitting body (36).

6. The fitting according to any one of claims 1 to 5, **characterized in that** the clamping element (52) can be screw-coupled to the fitting body (36) or be connected thereto in a different manner while securing it from axial displacement.

## Revendications

1. Raccord pour un tube composite matière plastique/métal, comportant une couche intérieure (12) en matière plastique et une enveloppe (14) en métal autour de la couche intérieure (12), le tube composite (10) étant pourvu à son extrémité de raccordement (18) d'une bride extérieure (22) qui présente une largeur de bride et qui est formée par un pli de la paroi (20) du tube, le pli présentant un premier tronçon de pli (26) dirigé depuis le tronçon cylindrique (24) de la paroi de tube (20) sensiblement radialement vers l'extérieur, et un deuxième tronçon de pli (28) qui se raccorde au premier tronçon de pli (26) et qui s'étend parallèlement au premier tronçon de pli (26) et est plus court que le premier tronçon de pli (26), de sorte que la couche intérieure (12) est à découvert à l'intérieur d'une zone d'étanchement (32) du premier tronçon de pli (26), zone qui se raccorde au tronçon cylindrique (24) de la paroi de tube (20), le raccord comprenant
- un corps de raccord (36) présentant un axe (38) coaxial à l'extrémité de raccordement (18) du tube composite (10),
- une surface d'étanchement (42) prévue sur le corps de raccord (36) et destinée à venir en appui sur la zone d'étanchement (32) de la couche intérieure (12) du tube composite (10), la surface d'étanchement (42) s'étendant sous un angle aigu par rapport à l'axe (38) du corps de raccord (36), et
- un élément de serrage (52) pour venir en appui contre le premier tronçon de pli (26) de la bride extérieure (22) du tube composite (10), l'élément de serrage (52) étant prévu pour serrer la zone d'étanchement (32) de la couche intérieure (12) du tube composite (10) à l'intérieur de sa bride extérieure (22) contre la surface d'étanchement (42) du corps de raccord (36) et étant susceptible d'être immobilisé contre celui-ci, **caractérisé en ce que**
- la surface d'étanchement (42) du corps de raccord (36) comprend au moins une saillie (56) dirigée en direction de l'extrémité de raccordement (18) du tube composite (10) et destinée à venir en appui ou à pénétrer au moins partiellement dans le matériau de la couche intérieure (12) du tube composite (10) dans la zone d'étanchement (32) de la couche intérieure (12).

2. Raccord selon la revendication 1, **caractérisé en ce que** ladite au moins une saillie (56) présente une configuration triangulaire et est réalisée sous forme de nervure périphérique.

3. Raccord selon la revendication 2, **caractérisé en ce qu'**il est prévu plusieurs nervures périphériques (56) parallèles les unes aux autres.

4. Raccord selon l'une des revendications 1 à 3, **caractérisé en ce que** la surface d'étanchement (42) du corps de raccord (36) présente une gorge de réception (58) pour un élément d'étanchéité (60), en particulier sous la forme d'un joint torique.

5. Raccord selon l'une des revendications 1 à 4, **caractérisé en ce que** la surface d'étanchement (42) est bombée ou plane et s'étend sous un angle de 30° à 90°, de préférence de 45° à 80° et en particulier d'environ 60° par rapport à l'axe (38) du corps de raccord (36).

6. Raccord selon l'une des revendications 1 à 5, **caractérisé en ce que** l'élément de serrage (52) est susceptible d'être vissé avec le corps de raccord (36) ou d'être relié à celui-ci d'une autre manière, bloqué à l'encontre de translations axiales.
